# EUROPÄISCHE PATENTSCHRIFT

(11) **EP 0 892 207 B1**
(45) Veröffentlichungstag und Bekanntmachung des Hinweises auf die Patenterteilung: **04.12.2002**
(21) Anmeldenummer: 98112435.7
(22) Anmeldetag: 04.07.1998
(51) Int. Cl.: F16L 59/12, F16L 59/14

(54) **Wärmeisoliertes Leitungsrohr**
Thermally insulated pipe
Tuyau isolé thermiquement

(30) Priorität: 16.07.1997 DE 29712560 U
(43) Veröffentlichungstag der Anmeldung: 20.01.1999
(73) Patentinhaber: BRUGG Rohrsysteme GmbH, D-31515 Wunstorf (DE)
(72) Erfinder: Schnell, Urs, 5242 Lupfig (CH); Demuth, Roland, 5400 Ennetbaden (CH); Homann, Jörn, 30655 Hannover (DE); Friessner, Jürgen, 30900 Wedemark (DE)

(56) Entgegenhaltungen:
- DE-A- 3 635 515
- DE-U- 7 816 809
- DE-U- 8 706 327
- DE-U- 9 310 530
- DE-U- 9 415 238

## Beschreibung

Die Erfindung betrifft ein wärmeisoliertes Leitungsrohr nach dem Oberbegriff des Anspruchs 1.

Aus der CH-PS 451 621 ist ein wärmeisoliertes Leitungsrohr zur Verlegung in Erde oder auch außerhalb der Erde zur Fortleitung erwärmter oder gekühlter Medien bekannt, welches im wesentlichen koaxial verlaufende metallische Rohre mit schraubenlinien- oder balgenförmiger Wellung zeigt, von denen das Innenrohr als die eigentliche Leitung dient und zwischen denen sich eine thermisch isolierende Schicht befindet und das Außenrohr am seiner Außenseite eine mechanisch und korrosionshemmend wirkende Schutzschicht aufweist. Die besonderen Vorteile dieses Leitungsrohres sind darin zu sehen, daß es kontinuierlich in großen Längen hergestellt und wie ein elektrisches Kabel auf Trommeln in abgemessener Länge versandt werden kann. Die exakte längenmäßige Anpassung kann an der Baustelle vorgenommen werden.

Dieses Leitungsrohr hat sich insbesondere dort von Vorteil erwiesen, wo aufwendige Erdarbeiten zwecks Verlegung von Leitungsrohren vermieden werden sollen. Thermisch bedingte Längenänderungen des Rohres brauchen weder beim Aufbau der Leitung in der Schichtenfolge noch bei der Verlegung berücksichtigt werden, weil die Wellung der Rohre diese in sich selbst ausgleicht.

Aus der DE-U-7816808 ist ein wärmeisoliertes Leitungsrohr zum Transport erwärmter oder gekühlter Medien bekannt, mit einem mediumführenden Innenrohr, einem im Abstand zum Innenrohr konzentrisch angeordneten Außenrohr sowie einer den Ringspalt zwischen dem Innenrohr und dem Außenrohr ausfüllenden Wärmeisolationsschicht aus aufgeschäumtem Polyurethan, wobei das Innenrohr ein zumindest abschnittsweise gewelltes Metallrohr und das Außenrohr ein Rohr aus thermoplastischem Kunststoff ist, das mit der Polyurethanschaumstoffschicht verklebt ist. Bei diesem Leitungsrohr sind die Endbereiche des Innenrohres einer Leitungsrohrlänge ungewellt, um die Leitungsrohrlängen einfacher miteinander verbinden zu können. Die Wellung des Innenrohres ist dazu vorgesehen, bei einer geradlinigen Verlegung thermisch bedingte Längenänderungen des Innenrohres zu kompensieren. Dieses Leitungsrohr ist nicht flexibel und wird in geraden Längen am Verlegeort angeliefert.

Die Verlegung der Haupttrassen von Fernwärmeleitungsrohren wird in der Regel von den Energieversorgungsunternehmen durchgeführt. Die Verbindung der Haupttrassen mit den einzelnen Verbrauchern, z. B. Einfamilienhäusern, wird jedoch von Subunternehmern, z. B. Heizungsbauern, durchgeführt. Da es sich bei den Anschlußleitungen zwischen der Haupttrasse und dem Endabnehmer in der Regel um Längen von weniger als 50 m handelt, ist der Transport solcher kurzer Längen auf einer Kabeltrommel wirtschaftlich nicht sinnvoll.

Der vorliegenden Erfindung liegt von daher die Aufgabe zugrunde, ein wärmeisoliertes Leitungsrohr anzugeben, welches unter Beibehaltung der genannten Vorteile des bekannten biegbaren wärmeisolierten Leitungsrohres wesentlich flexibler ist, so daß es zu handhabbaren Ringbunden gewickelt werden kann, deren Durchmesser 2,5 m nicht überschreitet, so daß die Ringbunde auf normalen Lastkraftwagen transportiert werden können.

Diese Aufgabe wird durch die im Kennzeichen des Anspruchs 1 erfaßten Merkmale gelöst.

Das Leitungsrohr gemäß der Lehre der Erfindung ist äußerst flexibel und kann mit einem Biegeradius in den benötigten Nennweiten von weniger als 2,30 m gebogen werden.

Weitere vorteilhafte Ausgestaltungen der Erfindung sind in den Unteransprüchen erfaßt.

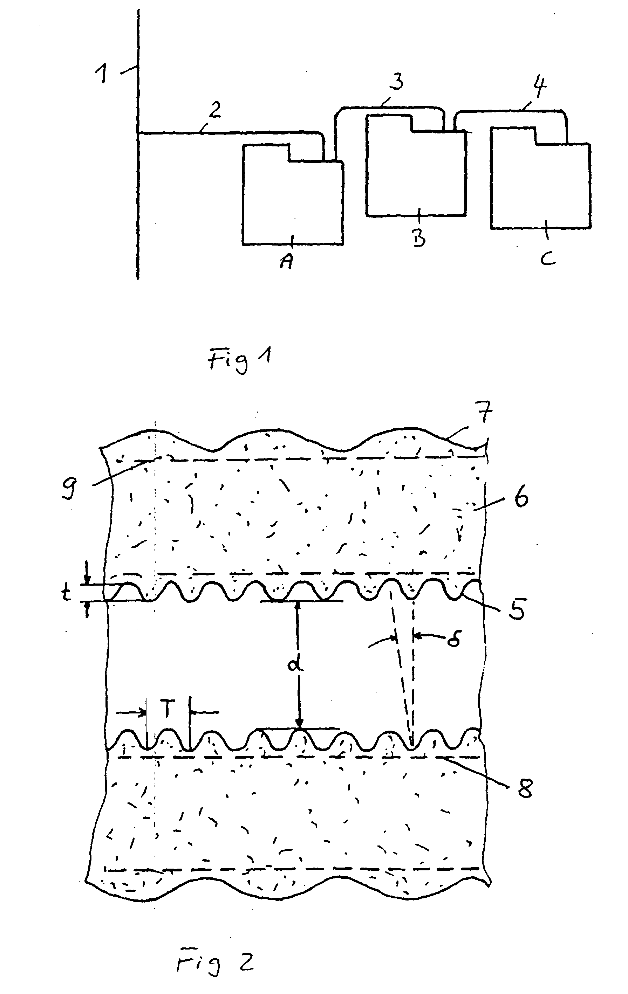

Die Erfindung ist anhand der in den Figuren 1 und 2 schematisch dargestellten Ausführungsbeispiele erläutert.

Figur 1 zeigt einen Verlegeplan für den Anschluß mehrerer Gebäude A, B und C an die Haupttrasse 1 eines Fernwärmenetzes. Zum Anschluß der Gebäude an die Haupttrasse 1 werden sog. Hausanschlußleitungen 2, 3 und 4 verwendet, welche die Gebäude nach der sogennannten Einschleifmethode an die Haupttrasse 1 anbinden. Durch die Einschleifmethode werden die Gebäude A, B und C auf kürzestem Weg direkt miteinander verbunden. Es gibt keine Verbindungsstellen im Erdreich, da die Anschlußleitungen 2, 3 und 4 in einem Stück verlegt sind. Daraus resultiert eine wesentlich größere Sicherheit. Die für die Verlegung der Leitungsrohre 2, 3 und 4 benötigten Gräben sind wesentlich kürzer als bei den bisher verwendeten Verlegesystemen.

Für die Leitungen 2, 3 und 4 werden mit besonderem Vorteil die Leitungsrohre gemäß der Lehre der Erfindung verwendet.

Figur 2 zeigt einen Schnitt durch ein erfindungsgemäßes Leitungsrohr.

Das Innenrohr 5 ist vorzugsweise ein längsnahtgeschweißtes, gewelltes Metallrohr vorzugsweise aus Edelstahl. Die Wellung ist derart ausgebildet, daß der Strömungswiderstand möglichst niedrig und die Flexibilität des Leitungsrohres möglichst hoch ist. Zu diesem Zweck ist das Verhältnis von Welltiefe t zum Abstand T zweier Wellenkuppen zwischen 0,01 und 0,5, das Verhältnis von Welltiefe zum Rohrinnendurchmesser d 0,01 bis 1,0 und der Winkel δ der Wellensteigung 5 bis 20°. Das Innenrohr 5 ist von einer Wärmeisolationsschicht 6 umgeben, die mit besonderem Vorteil aus einem geschlossenporigen Polyurethanschaum besteht, der vorteilhafterweise mit Cyclopentan getrieben ist. Über der Wärmeisolationsschicht 6 liegt ein Kunststoffaußenmantel 7, der mit einer ringförmigen Wellung versehen ist. Der Kunststoffaußenmantel 7 ist mit der Polyurethanschaumstoffschicht verklebt. Anstelle des gewellten Kunststoffaußenmantels 7 kann auch ein glatter Kunststoffaußenmantel verwendet werden. Als Werkstoff für den Kunststoffaußenmantel 6 wird bevorzugt Polyethylen verwendet. Der gewellte Kunststoffaußenmantel 7 hat gegenüber einem glatten Kunststoffaußenmantel den Vorteil, daß höhere Reibkräfte zwischen dem Leitungsrohr und dem Erdreich entstehen.

In unmittelbarer Nähe des Innenrohres 5 kann ein Band 8 aus einem Gitter oder Geflecht aus Metall oder Kunststoff liegen, welches in die Schaumstoffschicht 6 eingeschäumt ist und den Schaum beim Biegen des Leitungsrohres stützen soll und somit Risse und Abbrüche des Schaumes beim Biegen vermeidet.

Unmittelbar unter dem Kunststoffaußenmantel 7 kann ein Band 9 aus einem Gitter oder Geflecht aus Metall oder Kunststoff liegen, welches ebenfalls im Schaum 6 eingebettet ist. Dieses Band 9 stabilisiert den Schaum gegen Biegen und verhindert ein Brechen des Schaums bei Zug- und Druckbelastung während des Biegens. Darüber hinaus dient das Band 9 zur kraftschlüssigen Verbindung des Leitungsrohres mit einer nicht dargestellten Anschlußverbindungsarmatur.

Wie an sich bekannt, kann für erhöhte Drücke im Innenrohr 5 dieses mit einer Armierungslage versehen sein.

In der Schaumstoffschicht 6 können wie an sich bekannt, Überwachungsadern vorgesehen sein, die einen Feuchtigkeitseinbruch in die Wärmeisolationsschicht 6 melden und orten sollen.

In der Isolierschicht 6 können auch in nicht dargestellter Weise zwei oder mehrere Innenrohre vorgesehen sein, die zwecks Verbesserung der Biegbarkeit des Leitungsrohres miteinander verseilt werden sollten.

## Patentansprüche

1. Wärmeisoliertes Leitungsrohr zum Transport erwärmter oder gekühlter Medien, mit einem mediumführenden Innenrohr (5) einem im Abstand zum Innenrohr (5) konzentrisch angeordneten Außenrohr aus thermoplastischen Kunststoff (7), welches an seiner äußeren Oberfläche gewellt ist sowie einer den Ringspalt zwischen dem Innenrohr (5) und dem Außenrohr (7) ausfüllenden Wärmeisolationsschicht (6) aus aufgeschäumtem Polyurethan, welche mit dem Außenrohr verklebt ist, **gekennzeichnet durch** folgende Merkmale:
a) das Innenrohr (5) ist ein gewelltes Metallrohr oder ein glattes biegbares Kupferrohr
b) die Wärmeisolationsschicht (6) besteht aus FCKW-freiem Polyurethanhartschaum, der mit Kohlendioxid, Argon, Pentan oder einem teilhalogenierten Kohlenwasserstoff getrieben ist
c) direkt unterhalb des Außenmantels (7) ist ein gitter- oder geflechtartiges Band (9) aus Metall oder Kunststoff in der Wärmeisolationsschicht (6) eingebettet.

2. Wärmeisoliertes Leitungsrohr nach Anspruch 1, **dadurch gekennzeichnet, daß** das Innenrohr (5) ein längsnahtgeschweißtes gewelltes Rohr aus Edelstahl ist.

3. Wärmeisoliertes Leitungsrohr nach Anspruch 1 oder 2, **dadurch gekennzeichnet, daß** beim Innenrohr (5) das Verhältnis von Welltiefe t zum Abstand zweier Wellenkuppen T 0,01 bis 0,5, das Verhältnis von Welltiefe t zum Rohrinnendurchmesser d 0,01 bis 1,0 und der Winkel δ der Wellensteigung 5 bis 20° beträgt.

4. Wärmeisoliertes Leitungsrohr nach einem der Ansprüche 1 bis 3, **dadurch gekennzeichnet, daß** der Polyurethanschaum geschlossenporig ist und eine Bruchdehnung von mindestens 15 % aufweist.

5. Wärmeisoliertes Leitungsrohr nach einem der Ansprüche 1 bis 4, **dadurch gekennzeichnet, daß** auf dem Innenrohr (5) eine die Druckbelastbarkeit erhöhende sowie die Längung des Innenrohres verhindernde Armierung aufliegt.

6. Wärmeisoliertes Leitungsrohr nach einem der Ansprüche 1 bis 5, **dadurch gekennzeichnet, daß** innerhalb der Wärmeisolationsschicht (6) benachbart zum Innenrohr (5) ein gitter- oder netzförmiges Band (8) aus Metall oder Kunststoff angeordnet ist.

7. Wärmeisoliertes Leitungsrohr nach einem der Ansprüche 1 bis 6, **dadurch gekennzeichnet, daß** das Außenrohr (7) eine ringförmige Wellung aufweist.

8. Wärmeisoliertes Leitungsrohr nach einem der Ansprüche 1 bis 7, **dadurch gekennzeichnet, daß** zwischen Innenrohr (5) und Außenrohr (7) Überwachungsadern zur Meldung von Feuchtigkeitseinbrüchen vorgesehen sind.

9. Wärmeisoliertes Leitungsrohr nach einem der Ansprüche 1 bis 8, **dadurch gekennzeichnet, daß** zwei oder mehr Innenrohre innerhalb der Wärmeisolationsschicht (6) angeordnet sind.

10. Wärmeisoliertes Leitungsrohr nach Anspruch 9, **dadurch gekennzeichnet, daß** die Innenrohre miteinander verseilt sind.

## Claims

1. A heat-insulated transport pipe for the transport of heated or cooled media, consisting of an inner pipe (5) conducting the media, an outer pipe (7), made of an artificial thermoplastic material, which is arranged concentrically around the inner pipe (5) at a certain distance, and which has an outer surface that is undulated, and a heat-insulating layer (6) filling the ring slit between the inner pipe (5) and the outer pipe (7), made of polyurethane foam, which is glued together with the outer pipe **characterized by** the following characteristics:
a) the inner pipe (5) is an undulated metal pipe or a straight, flexible copper pipe;
b) the heat-insulating layer (6) is made of CFC-free polyurethane hard foam, which is propelled by carbon dioxide, argon, pentane, or a partially halogenated hydrocarbon;
c) directly under the outer coat (7), there is a strip (9) made of a metal or plastic grid or weave, embedded in the heat-insulating layer (6).

2. A heat-insulated transport pipe according to claim 1, **characterized in that** the inner pipe (5) is an undulated stainless-steel pipe with a longitudinal weld.

3. A heat-insulated transport pipe according to claims 1 or 2, **characterized in that**, for the inner pipe (5), the ratio between the undulation depth t and the distance T between two wave peaks is between 0.01 and 0.5, while the ratio between the undulation depth t and the inner diameter d of the pipe is 0.01 to 1.0, and the angle δ of the wave slope is 5 to 20°.

4. A heat-insulated transport pipe according to one of the claims 1 to 3, **characterized in that** the polyurethane foam is non-porous and has a failing strain of at least 15 %.

5. A heat-insulated transport pipe according to one of the claims 1 to 4, **characterized in that** there is a reinforcement in contact with the inner pipe (5), which increases the pressure resistance of the inner pipe and prevents it from being stretched.

6. A heat-insulated transport pipe according to one of the claims 1 to 5, **characterized in that** there is a strip (8) made of a metal or plastic grid or weave inside the heat-insulating layer (6) in proximity of the inner pipe (5).

7. A heat-insulated transport pipe according to one of the claims 1 to 6, **characterized in that** the outer pipe (7) has a ring-shaped undulation.

8. A heat-insulated transport pipe according to one of the claims 1 to 7, **characterized in that** monitoring wires for signaling liquid penetration between the inner pipe (5) and the outer pipe (7) are provided.

9. A heat-insulated transport pipe according to one of the claims 1 to 8, **characterized in that** there are two or more inner pipes inside the heat-insulating layer (6).

10. A heat-insulated transport pipe according to claim 9, **characterized in that** the inner pipes are stranded together.

## Revendications

1. Tube à isolation thermique pour le transport de fluides réchauffés ou refroidis, avec un tube intérieur conducteur de fluides (5), un tube extérieur en matière synthétique thermoplastique (7) disposé concentriquement par rapport au tube intérieur (5), ce tube extérieur (7) étant ondulé à sa surface extérieure, ainsi qu'une couche d'isolation thermique (6) en polyuréthane expansé, collée au tube extérieur et remplissant l'interstice annulaire entre le tube intérieur (5) et le tube extérieur (7), **caractérisé par** les propriétés suivantes :
a) le tube intérieur (5) est un tube métallique ondulé ou un tube en cuivre lisse pouvant être plié
b) la couche d'isolation thermique (6) est constituée de mousse polyuréthane rigide sans CFC, expansé à l'aide de dioxyde de carbone, argon, pentane ou un hydrocarbure partiellement halogéné
c) une bande (9) sous forme de grille ou de treillis métallique ou synthétique est noyée dans la couche d'isolation thermique (6) directement sous la gaine extérieure (7).

2. Tube à isolation thermique selon la revendication 1, **caractérisé par le fait que** le tube intérieur (5) est un tube ondulé en acier inoxydable avec une soudure longitudinale.

3. Tube à isolation thermique selon la revendication 1 ou 2, **caractérisé par le fait que** pour le tube intérieur (5), le rapport entre la profondeur de l'ondulation-t et la distance T de deux crêtes d'ondulation se situe entre 0,01 et 0,5 ; le rapport entre la profondeur de l'ondulation t et le diamètre intérieur du tube d entre 0,01 et 1,0 et l'angle δ du pas de l'ondulation entre 5 et 20°.

4. Tube à isolation thermique selon une des revendications 1 à 3, **caractérisé par le fait que** la mousse polyuréthane possède des cellules fermées et présente un allongement à la rupture d'au moins 15 %.

5. Tube à isolation thermique selon une des revendications. 1 à 4, **caractérisé par le fait qu'**une armature de renfort augmentant la résistance à la compression et empêchant la dilation du tube intérieur (5) repose sur celui-ci.

6. Tube à isolation thermique selon une des revendications 1 à 5, **caractérisé par le fait qu'**une bande (8) sous forme de grille ou de treillis métallique ou synthétique est disposée dans la couche d'isolation thermique (6), à proximité du tube intérieur (5).

7. Tube à isolation thermique selon une des revendications 1 à 6, **caractérisé par le fait que** le tube extérieur (7) présente une ondulation annulaire.

8. Tube à isolation thermique selon une des revendications 1 à 7, **caractérisé par le fait que** des brins de surveillance sont prévus entre le tube intérieur (5) et le tube extérieur (7) pour signaler des pénétrations d'humidité.

9. Tube à isolation thermique selon une des revendications 1 à 8, **caractérisé par le fait qu'**au moins deux tubes intérieurs sont disposés à l'intérieur de la couche d'isolation (6).

10. Tube à isolation thermique selon la revendication 9, **caractérisé par le fait que** les tubes intérieurs sont toronnés ensemble.
